# EUROPÄISCHE PATENTSCHRIFT

(11) **EP 1 592 894 B1**
(45) Veröffentlichungstag und Bekanntmachung des Hinweises auf die Patenterteilung: **18.10.2006**
(21) Anmeldenummer: 04705389.7
(22) Anmeldetag: 27.01.2004
(51) Int. Cl.: F16C 33/76, C23C 2/00, F16J 15/06

(54) **LAGERUNG FÜR EINE GETAUCHT IN EINEM METALLSCHMELZEBAD ANGEOR NETE UMLENK- ODER FÜHRUNGSROLLE**
BEARING ARRANGEMENT FOR A DEFLECTION ROLLER OR A GUIDE ROLLER ARRANGED IN AN IMMERSED MANNER IN A METAL MELTING BATH
LOGEMENT DES PALIERS POUR UN ROULEAU DE GUIDAGE OU DE RENVOI PLACE AU TREMPE DANS UN BAIN DE FUSION

(30) Priorität: 24.04.2003 DE 10319840
(43) Veröffentlichungstag der Anmeldung: 09.11.2005
(73) Patentinhaber: DUMA MASCHINEN UND ANLAGENBAU GmbH, 47167 Duisburg (DE)
(72) Erfinder: PANNENBECKER, Heinrich, 46569 Hünxe (DE); ERWIG, Hermann, 46537 Dinslaken (DE)
(74) Vertreter: Meyer, Hans-Joachim
(86) Internationale Anmeldenummer: PCT/EP2004/000653
(87) Internationale Veröffentlichungsnummer: WO 2004/094851

(56) Entgegenhaltungen:
- EP-A- 0 915 181
- DE-A- 3 940 890
- DE-A- 4 307 282
- DE-A- 10 104 032
- FR-A- 2 735 499
- PATENT ABSTRACTS OF JAPAN vol. 017, no. 195 (C-1049), 16. April 1993 (1993-04-16) -& JP 04 346641 A (KAWASAKI STEEL CORP), 2. Dezember 1992 (1992-12-02)
- PATENT ABSTRACTS OF JAPAN vol. 016, no. 304 (C-0959), 6. Juli 1992 (1992-07-06) -& JP 04 083858 A (SUMITOMO METAL IND LTD), 17. März 1992 (1992-03-17)

## Beschreibung

Die Erfindung betrifft eine Lagerung für eine in einem Metallschmelzebad getaucht angeordnete Umlenk- oder Führungsrolle für zu beschichtendes Metallband, die an Rollentragarmen mit gegen das Metallschmelzebad abgedichteter Lager drehbar gelagert ist.

Lagerungen dieser Art werden für Umlenk- und Führungsrollen verwendet, mit denen zu beschichtendes Metallband in einem Metallschmelzebad, insbesondere zu verzinkendes Stahlband in einem Zinkbad umgelenkt bzw. geführt wird. Das in das Metallschmelzebad eingeleitete Metallband tritt dabei im wesentlichen senkrecht aus dem Metallschmelzebad aus, wobei oberhalb des Schmelzespiegels überschüssiges Beschichtungsmittel mittels Abblasdüsen von den Bandoberflächen abgeblasen wird. Die Lager der Umlenk- und Führungsrollen sind beispielsweise in Ausnehmungen am Ende von Rollentragarmen angeordnet und weisen mitunter offene Lagerschalen auf. Aufgrund der getauchten Anordnung der Umlenk- und Führungsrollen im Metallschmelzebad sind die Lager hohen Temperaturen und Verschleiß ausgesetzt. Zur Erzielung möglichst langer unterbrechungsfreier Betriebszeiten werden die Lager aus widerstandsfähigen Werkstoffen, insbesondere aus keramischen Werkstoffen hergestellt (DE 195 11 943 A1). Ferner wurde auch schon vorgeschlagen (DE 37 18 286 A1), die rotierenden Elemente derartiger Lager gegen die Lagerschale durch darin eingesetzte, die Wellen bzw. Tragzapfen der Umlenk- oder Führungsrolle umfassende Dichtungsringe zu beaufschlagen und so das Eindringen der Metallschmelze zu verhindern bzw. zu begrenzen.

Aus der DE 39 40 890 C2 ist eine gattungsgemäße Lagerung bekannt, bei der die Lager in am Rollentragarm angeordneten, geschlossenen, gegen das Metallschmelzebad abgedichteten Kammern angeordnet sind. Die Kammern umfassen eine die Lager aufnehmende Lagerkammer und eine der Lagerkammer vorgeordnete Dichtkammer, wobei zwischen den beiden Kammern eine ringförmige Schottscheibe angeordnet ist. Die Dichtung gegen das Metallschmeizebad besteht aus einer einen rotierenden Wellenverbinder umfassenden, in Richtung auf das Metallschmeizebad druckbeaufschlagten Konushülse und einer ihren Konus aufnehmenden, in einer Abschlußwand zwischen Dichtkammer und Metallschmelzebad eingesetzten Konuswanne. Die Konushülse und die Konuswanne sind aus hochhitzebeständigem Keramikwerkstoff gefertigt. Diese Konusdichtung kann jedoch den Eintritt von flüssigen Bestandteilen der Metallschmelze in die Dichtkammer und damit letztlich in die Lagerkammer nicht vollständig verhindern, da sie schleifend an dem rotierenden Wellenverbinder anliegt und somit einem die Abdichtungsfunktion beeinträchtigenden Verschleiß unterworfen ist.

Die JP 04346641 (Patent Abstracts of Japan) offenbart eine in einem Metallschmelzebad getaucht angeordnete Umlenkrolle, die an außerhalb des Metallschmelzebades angeordneten Lagern drehbar gelagert ist. Die Umlenkrolle ist dabei mit einer Welle versehen, die durch Öffnungen in der Wand des Metallbadgefäßes zu den Lagern geführt ist. Im Bereich der Öffnungen sind Linearmotoren angeordnet, die jeweils eine elektromagnetische Kraft erzeugen, welche ein Herausfließen von Metallschmelze an der Öffnung verhindert.

Davon ausgehend liegt der vorliegenden Erfindung die Aufgabe zugrunde, eine verbesserte Lagerung der eingangs genannten Art zu schaffen, die insbesondere eine verbesserte Abdichtung der Lager gegen ein Eindringen von Badschmelze aufweist.

Diese Aufgabe wird erfindungsgemäß dadurch gelöst, dass das jeweilige Lager gegen das Metallschmelzebad mittels mindestens einer Induktionsspule abgedichtet ist, die einen der Umlenk- oder Führungsrolle zugeordneten Tragzapfen, eine Welle oder eine Achse umgibt, wobei die Umlenk- oder Führungsrolle an ihren beiden Stirnseiten jeweils einen buchsenartigen Adapter aufweist, der mit der Induktionsspule einen Dichtspalt definiert. Der Tragzapfen kann dabei insbesondere auch als Achszapfen ausgebildet sein.

Die erfindungsgemäße Lagerung zeichnet sich dadurch aus, dass die Induktionsspule ein Eindringen von Metallschmelze in den Bereich des jeweiligen Lager sicher verhindert und praktisch keinem mechanischen Verschleiß unterliegt.

Zur Erzielung einer langen Standfestigkeit der Lagerung ist es ferner günstig, wenn der Rollentragarm eine Lüftungsleitung für einen Druckausgleich im Bereich der kompletten Lagerung aufweist. Nach einer bevorzugten Ausgestaltung der erfindungsgemäßen Lagerung weist insbesondere der Tragzapfen bzw. die Welle der getauchten Badrolle Bohrungen für einen Druckausgleich im Bereich des Lagers bzw. der Lager auf.

Nach einer vorteilhaften Ausgestaltung der Erfindung ist vorgesehen, dass die Tragzapfen als Achszapfen drehfest an den Rollentragarmen befestigt sind, wobei die Umlenk- oder Führungsrolle an ihren beiden Stirnseiten jeweils einen buchsenartigen Adapter aufweist, der einen Axialabschnitt des jeweiligen Tragzapfens koaxial umgibt. Auf dem Tragzapfen sitzt dann vorzugsweise ein den Adapter tragendes Pendelrollenlager. Eine solche Lagerung besitzt einen relativ einfachen konstruktiven Aufbau und lässt zugleich - in gewissen Grenzen - einen fertigungstoleranzbedingten und/oder einen im Beschichtungsbetrieb mitunter auftretenden Winkelversatz zwischen der Drehachse der Badrolle und der Längsachse des Tragzapfens zu.

Hinsichtlich eines solchen Winkelversatzes ist auch vorteilhaft, wenn der buchsenartige Adapter einen durchmessererweiterten Endabschnitt aufweist, der einem mittleren Scheibenabschnitt einer Kugel entspricht, wobei die Induktionsspule dann radial beabstandet zu diesem Endabschnitt des Adapters angeordnet ist und die dem Endabschnitt zugewandte Ringfläche der Induktionsspule in Axialschnittansicht gesehen konkav gewölbt ist. Die Induktionsspule und der Adapter begrenzen in diesem Fall einen kugelzonenförmigen Dichtspalt.

Eine besonders vorteilhafte Variante ist in diesem Zusammenhang dadurch gekennzeichnet, dass der buchsenartige Adapter einen Endabschnitt aufweist, der einem Kugelabschnitt bzw. Scheibenabschnitt einer Kugel entspricht, wobei die Induktionsspule radial beabstandet zu diesem Endabschnitt des Adapters angeordnet ist, die dem Endabschnitt des Adapters zugewandte Ringfläche der Induktionsspule in Axialschnittansicht konkav gewölbt ist, und die Induktionsspule axial beabstandet zu dem größten Außendurchmesserbereich des Endabschnitts des Adapters angeordnet ist. Die Induktionsspule und der Adapter begrenzen bei dieser Variante einen kalottenartigen Dichtspalt, der sehr schmal ausgeführt werden kann.

Weitere bevorzugte und vorteilhafte Ausgestaltungen der erfindungsgemäßen Lagerung sind in den Unteransprüchen angegeben.

Nachfolgend wird die Erfindung anhand einer mehrere Ausführungsbeispiele darstellenden Zeichnung näher erläutert. Es zeigen:
- Fig. 1: eine Vorderansicht auf eine zwei Tragarme aufweisende Lagerung einer Beschichtungsmittelbadrolle;
- Fig.2: eine Schnittansicht des unteren Endes eines Rollentragarms mit einem daran gehaltenen Tragzapfen, einem Pendelrollenlager und einer Lagerabdichtung gemäß einem alternativen Ausführungsbeispiel;
- Fig. 3: eine Schnittansicht des unteren Endes eines Rollentragarms mit einem daran gehaltenen Tragzapfen, einem Pendelrollenlager und einer Lagerabdichtung gemäß einem dritten Ausführungsbeispiel;
- Fig. 4: eine Schnittansicht des unteren Endes eines Rollentragarms mit einem daran gehaltenen Tragzapfen, einem Pendelrollenlager und einer Lagerabdichtung gemäß einem vierten Ausführungsbeispiel; und
- Fig. 5: eine Schnittansicht des unteren Endes eines Rollentragarms mit einer daran gehaltenen Achse, einem Pendelrollenlager und einer Lagerabdichtung gemäß einem fünften Ausführungsbeispiel;
- Fig. 6: eine Schnittansicht des unteren Endes eines Rollentragarms mit einer daran gehaltenen Achse, einem Pendelrollenlager und einer Lagerabdichtung gemäß einem sechsten Ausführungsbeispiel; und
- Fig. 7: eine Schnittansicht des unteren Endes eines Rollentragarms mit einem daran gehaltenen Achszapfen, einem Pendelrollenlager und einer Lagerabdichtung gemäß einem siebten Ausführungsbeispiel.

In der Zeichnung bezeichnen gleiche Bezugszeichen gleiche bzw. funktionsgleiche Teile einer erfindungsgemäßen Lagerung.

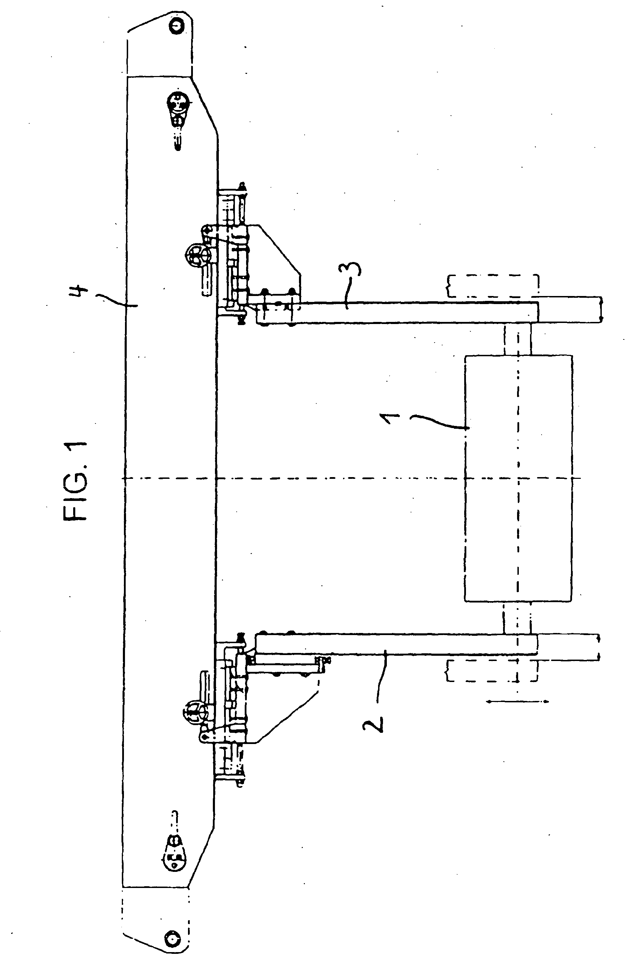

Fig. 1 zeigt eine in einem Metallschmelzebad getaucht anzuordnende Umlenk- oder Führungsrolle 1. Die Umlenk- bzw. Führungsrolle 1 wird nachfolgend der Einfachheit halber als Zinkbadrolle bezeichnet. Die Zinkbadrolle 1 ist an Rollentragarmen 2, 3 gehalten, die somit teilweise in das Metallschmelzebad getaucht sind. Die Rollentragarme 2, 3 sind mit einer oberhalb des Zinkschmelzebades angeordneten Traverse 4 linear verstellbar verbunden. Mindestens einer der Rollentragarme 2, 3 ist also in Richtung der Drehachse der Zinkbadrolle 1 verschiebbar gelagert. Der Rollentragarm 2 ist zudem in vertikaler Richtung verstellbar.

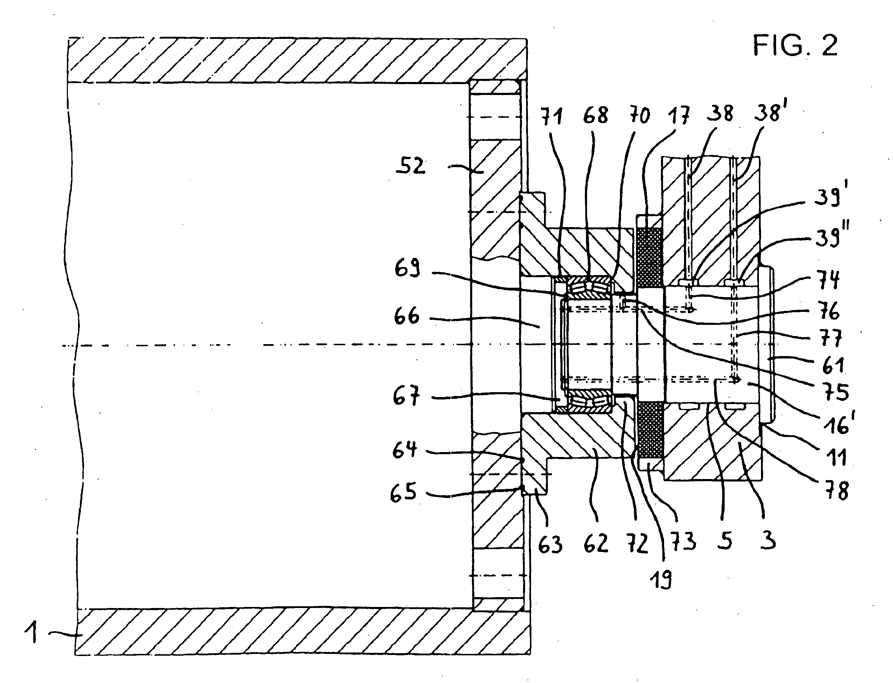

Bei dem in Fig. 2 dargestellten Ausführungsbeispiel ist der Tragzapfen 16' drehfest an dem Rollentragarm 3 befestigt und somit als Achszapfen ausgeführt. Der Tragzapfen bzw. Achszapfen 16' ist formschlüssig in eine Durchbrechung 5 des Rollentragarms 3 gesteckt und an seinem flanschartigen Kopfabschnitt 61 mit dem Rollentragarm 3 über eine umlaufende Dichtnaht 11 verschweißt.

An der dem Rollentragarm 3 zugewandten Stirnseite bzw. Stirnplatte 52 der Zinkbadrolle 1 ist mittels Schraubverbindungen (gestrichelt angedeutet) ein buchsenartiger Adapter 62 lösbar befestigt, der einen Axialabschnitt des Tragzapfens 16' koaxial umgibt. Der Adapter 62 weist einen Flansch 63 auf, in dessen der Zinkbadrolle 1 zugewandten Seite zwei ringförmige Nuten mit unterschiedlichem Durchmesser zur Aufnahme ringförmiger Dichtungen 64, 65 koaxial ausgebildet sind. An der kreisscheibenförmigen Stirnplatte 52 der Zinkbadrolle 1, ist ein kreisscheibenförmiger Vorsprung 66 ausgebildet, der formschlüssig in den Hohlraum 67 des Adapters 62 ragt.

Der Tragzapfen 16' weist in Axialrichtung mehrere Absätze auf. Der seinem Einsteckende nächstliegende Absatz dient der axialen Festlegung des inneren Laufringes eines zweireihigen Pendelrollenlagers 68. Der innere Laufring ist ferner mittels eines in eine Ringnut des Tragzapfens 16' eingreifenden Spreng- oder Sicherungsring 69 axial festgelegt. Der äußere Laufring des Pendelrollenlagers 68 ist einerseits durch einen umlaufenden, nach innen vorstehenden Anschlag 70 des Adapters 62 und andererseits durch einen am zapfenförmigen Vorsprung 66 der Stirnplatte 52 angrenzenden Zwischenring 71 axial festgelegt.

An den Anschlag 70 des Adapters 62 schließt sich ein nach innen gerichteter Radialabsatz 72 an, der eine von dem Tragzapfen 16' mit Spiel durchdrungene Bohrung bzw. Durchbrechung definiert.

An der der Zinkbadrolle 1 zugewandten Seite des Rollentragarms 3 ist ein ringförmiger Ansatz 73 angeordnet, der mit dem Rollentragarm 3 verschweißt ist. Alternativ kann hier auch eine lösbare Verbindung vorgesehen werden. Der ringförmige Ansatz 73 endet in axialer Richtung mit relativ geringem Abstand vor dem Adapter 62. Der Innendurchmesser des ringförmigen Ansatzes 73 entspricht etwa dem Außendurchmesser des Adapters 62 auf Höhe des Radialabsatzes 72.

In dem ringförmigen Ansatz 73 bzw. in dem von ihm und dem Tragzapfen 16' begrenzten Ringraum ist eine Induktionsspule 17 angeordnet. Die Induktionsspule 17 bzw. ihr Gehäuse füllt den Ringraum vollständig aus. In axialer Richtung schließt die Induktionsspule 17 in etwa bündig mit dem ringförmigen Ansatz 73 ab, so dass zwischen der Induktionsspule 17 und dem Radialabsatz 72 des Adapters 62 ein Dichtspalt 19 vorhanden ist. Das Eindringen von flüssigem Metall aus dem Metallschmelzebad in das durch den Adapter 62 gebildete Lagergehäuse wird durch die Induktionsspule 17 wirksam verhindert.

Der Rollentragarm 3 weist zwei Lüftungsbohrungen bzw. Lüftungsleitungen 38, 38' auf, die im Bereich des Tragzapfens 16' jeweils in eine in der Wandung der Durchbrechung 5 des Rollentragarms 3 ausgebildete Ringnut 39' bzw. 39" münden.

Der Tragzapfen 16' ist auf Höhe der Ringnut 39' mit einer Radial- oder Querbohrung 74 versehen, die als Sackbohrung ausgeführt ist, jedoch mit einer ebenfalls als Sackbohrung ausgeführten, am Einsteckende des Tragzapfens 16' mündenden Axialbohrung 75 durchgängig verbunden ist. Ferner weist der Tragzapfen 16' auf Höhe des Radialabsatzes 72 des Adapters 62 eine wiederum als Sackbohrung ausgeführte Radial- oder Querbohrung 76 auf, die ebenfalls mit der Axialbohrung 75 durchgängig verbunden ist.

Schließlich ist in dem Tragzapfen 16' auf Höhe der Ringnut 39" eine weitere Radial- oder Querbohrung 77 angeordnet, die wiederum als Sackbohrung ausgeführt und mit einer weiteren als Sackbohrung ausgeführten, am Einsteckende des Tragzapfens-16' mündenden Axialbohrung 78 durchgängig verbunden ist.

Über die Bohrungen 38, 74, 75, 76 kann dem Lagerbereich gekühlte Luft zugeführt werden, wobei die Bohrungen 38', 77, 78 einer Luftabfuhr bzw. einem Druckausgleich dienen.

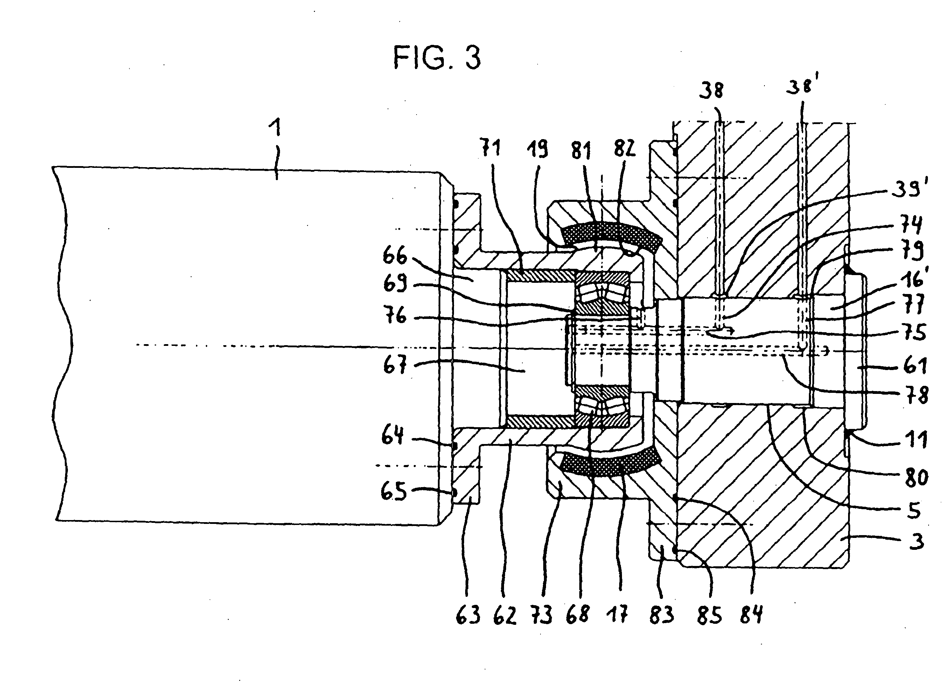

Das in Fig. 3 dargestellte Ausführungsbeispiel unterscheidet sich von dem Ausführungsbeispiel gemäß Fig. 2 durch die Ausgestaltung des buchsenartigen Adapters 62 und die Anordnung sowie die Form der Induktionsspule 17.

Der Tragzapfen 16' ist als Achszapfen drehfest am Rollentragarm 3 befestigt, indem sein Kopfabschnitt 61 mit dem Rollentragarm abdichtend verschweißt ist. Der Rollentragarm 3 ist zur formschlüssigen Aufnahme des Tragzapfens 16' mit einer zweistufigen Durchbrechung bzw. Bohrung 5 versehen, wobei der Tragzapfen 16' im Bereich des durchmessererweiterten Abschnitts der Bohrung 5 einen entsprechend durchmessererweiterten Absatz 79 aufweist, der zu dem durchmesserkleineren Abschnitt der Bohrung 5 beabstandet ist, sodass die Bohrung 5 und der Tragzapfen 16' einen Ringraum 80 begrenzen.

In dem mit der Stirnseite der Zinkbadrolle 1 verschraubten Flansch 63 des buchsenartigen Adapters 62 sind wie bei dem Ausführungsbeispiel gemäß Fig. 2 Ringnuten zur Aufnahme von Ringdichtungen 64, 65 ausgebildet. Auch sitzt auf dem durchmesserkleinsten Abschnitt des Tragzapfens 16' ein den Adapter 62 tragendes Pendelrollenlager 68.

Im Unterschied zu dem Ausführungsbeispiel gemäß Fig. 2 weist der Adapter 62 einen durchmessererweiterten, einem mittleren Scheibenabschnitt einer Kugel entsprechenden Endabschnitt 81 auf. Die Induktionsspule 17 ist radial beabstandet zu dem Endabschnitt 81 des Adapters 62 angeordnet, wobei die dem Endabschnitt 81 des Adapters 62 zugewandte Ringfläche 82 der Induktionsspule 17 in der Schnittansicht gesehen konkav gewölbt ist. Die Induktionsspule 17 hat somit im wesentlichen die Form eines Ringes mit in Axialrichtung gesehen konkav gewölbter Innenwandung und konvex gewölbter Außenwandung. Die Form des durch den Adapter 62 und die Induktionsspule 17 begrenzten Dichtspaltes 19 entspricht somit im wesentlichen der Form einer Kugelzone.

Die Induktionsspule 17 ist in einer entsprechend geformten Ausnehmung eines ringförmigen Ansatzes 73 angeordnet, der über einen Flansch 83 und Schraubverbindungen (gestrichelt angedeutet) lösbar mit dem Rollentragarm 3 verbunden ist. In dem Flansch 83 sind - wie bei dem Flansch 63 des buchsenartigen Adapters 62 - Ringnute zur Aufnahme von Ringdichtungen 84, 85 ausgebildet.

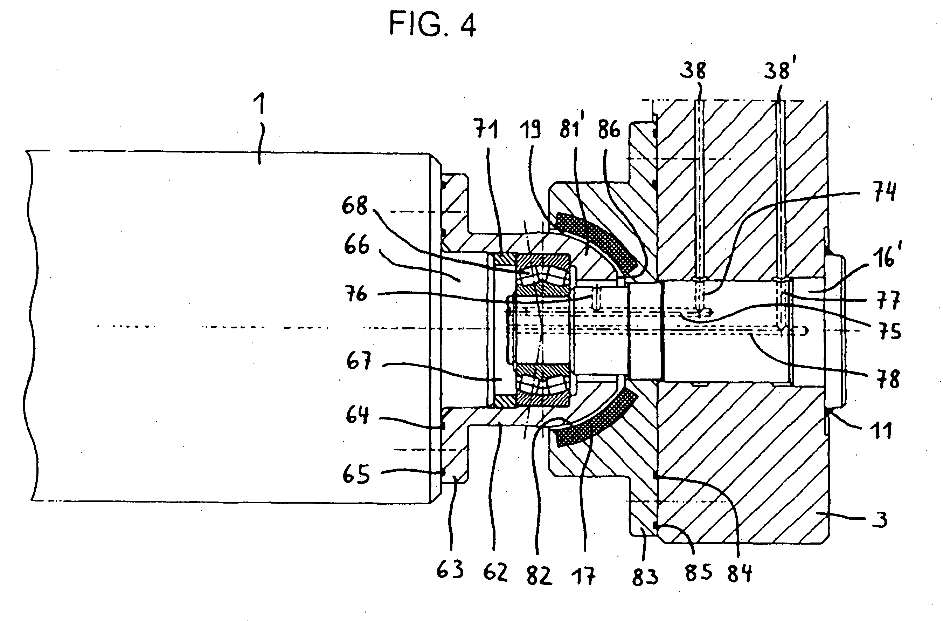

Das in Fig. 4 dargestellte Ausführungsbeispiel unterscheidet sich von dem Ausführungsbeispiel gemäß Fig. 3 im wesentlichen dadurch, dass der buchsenartige Adapter 62 einen Endabschnitt 81' aufweist, der im wesentlichen einem Scheibenabschnitt einer Kugel entspricht, wobei die zu einander parallel verlaufenden Schnittflächen der Kugelscheibe bzw. Kugelschicht unterschiedliche Durchmesser aufweisen. Der kleinere Durchmesser der dem Rollentragarm 3 zugewandten Schnittbzw. Stirnfläche 86 der Kugelscheibe ist dabei kleiner als der Außendurchmesser des Pendelrollenlagers 68, während die Induktionsspule 17, die wiederum in Axialschnittansicht gesehen konkav gewölbt und radial beabstandet zu dem Endabschnitt 81' des Adapters 62 angeordnet ist, zudem axial beabstandet zu dem größten Außendurchmesserbereich des Endabschnitts 81' des Adapters 62 angeordnet ist.

In den in den Figuren 3 und 4 dargestellten Ausführungsbeispielen sind somit jeweils die Induktionsspule 17 und der ihr zugeordnete Endabschnitt 81 bzw. 81' des Adapters 62 ähnlich wie die Gelenkteile eines Kugelgelenks ausgebildet, wobei sich die Induktionsspule 17 und der Endabschnitt 81 bzw. 81' des Adapters 62 allerdings nicht berühren. Es ist zu erkennen, dass sich der Dichtspalt 19 bei dem Ausführungsbeispiel gemäß Fig. 4 grundsätzlich schmaler ausbilden lässt als der Dichtspalt 19 bei dem Ausführungsbeispiel gemäß Fig. 3 Während der Dichtspalt 19 in Fig. 3 im wesentlichen die Form einer mittleren Kugelzone hat, weist der Dichtspalt 19 in Fig. 4 eher die Form einer Kalotte auf, die von dem Tragzapfen 16' durchdrungen ist.

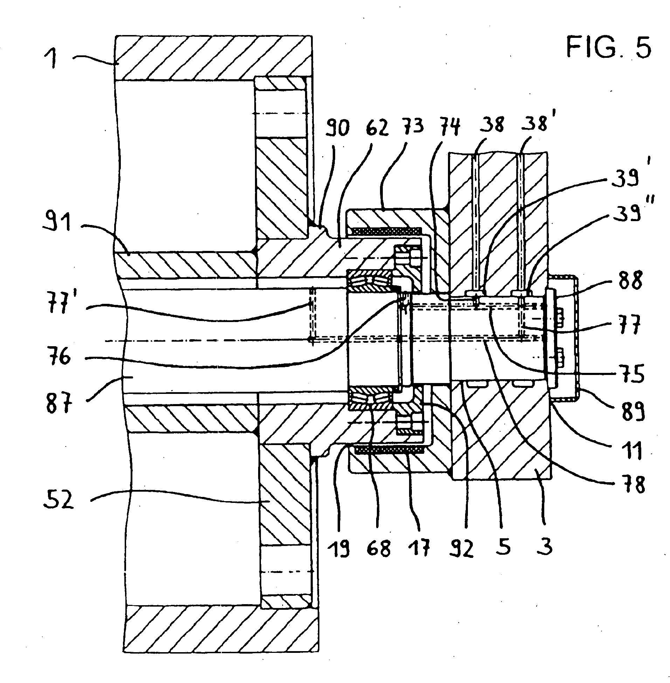

In Fig. 5 ist ein weiteres Ausführungsbeispiel einer erfindungsgemäßen Lagerung dargestellt. Die Zinkbadrolle 1 ist auf einer durchgehenden, an den Rollentragarmen 2, 3 gehaltenen Achse 87 drehbar gelagert. Die Achse 87 ist an ihren beiden Enden jeweils mit mehreren Absätzen versehen, wobei der durchmesserkleinste Abschnitt der Achse 87 in einer entsprechenden Durchbrechung 5 des jeweiligen Rollentragarms 3 formschlüssig gehalten ist. Die Achse 87 ist durch den Absatz an der der Zinkbadrolle 1 zugewandten Seite des Rollentragarms 3 und durch eine an ihrer jeweiligen Stirnseite angebrachte scheibenförmige Platte 88 axial festgelegt. Die Platte 88 ist mit der Achse 87 verschraubt. Die Platte 88 ist durch eine mit dem Rollentragarm 3 verschweißte Dichtkappe 89 abgedeckt.

Die Stirnplatte 52 der Zinkbadrolle 1 weist eine mittig angeordnete Bohrung auf, in die ein buchsenförmiger Adapter 62 formschlüssig eingesetzt ist, der mit der Stirnplatte 52 durch eine Dichtnaht verschweißt ist. Der Adapter 62 weist an der Verbindungsstelle vorzugsweise einen Bund 90 oder Flansch auf. An der in die hohlzylindrische Zinkbadrolle 1 weisenden Seite des Adapters 62 ist das Ende eines durchgehenden Rohres 91 angeschweißt.

Auf der Achse sitzt ein Pendelrollenlager 68, dessen innerer Laufring einerseits durch den dortigen Achsabsatz und andererseits durch einen Sicherungsring und einen Zwischenring axial festgelegt ist. Der äußere Laufring des Pendelrollenlagers 68 ist durch einen Absatz des Adapters 62 und einen ringförmigen, mit dem Adapter 62 durch Schrauben verbundenen Lagerdeckel 92 axial festgelegt.

Der Rollentragarm 3 ist mit einem ringförmigen Ansatz 73 versehen, der mit dem Rollentragarm 3 durch eine umlaufende Schweißnaht abdichtend verbunden ist. Der ringförmige Ansatz 73 ist an seiner Innenseite mit einer den Adapter 62 umgebenden Induktionsspule 17 versehen. Die zylinderförmige Induktionsspule 17 und der dazu radial beabstandete Adapter 62 begrenzen einen Dichtspalt 19. Ähnlich wie im Ausführungsbeispiel gemäß Fig. 2 sind auch bei dem in Fig. 5 gezeigten Ausführungsbeispiel Lüftungsbohrungen vorhanden. Die Lüftungsbohrungen 74, 75, 76, 77, 77', 78 sind in der Achse 87 so angeordnet, dass das Pendelrollenlager 68 zwischen den Querbohrungen 76, 77' und somit im Lüftungskreislauf liegt.

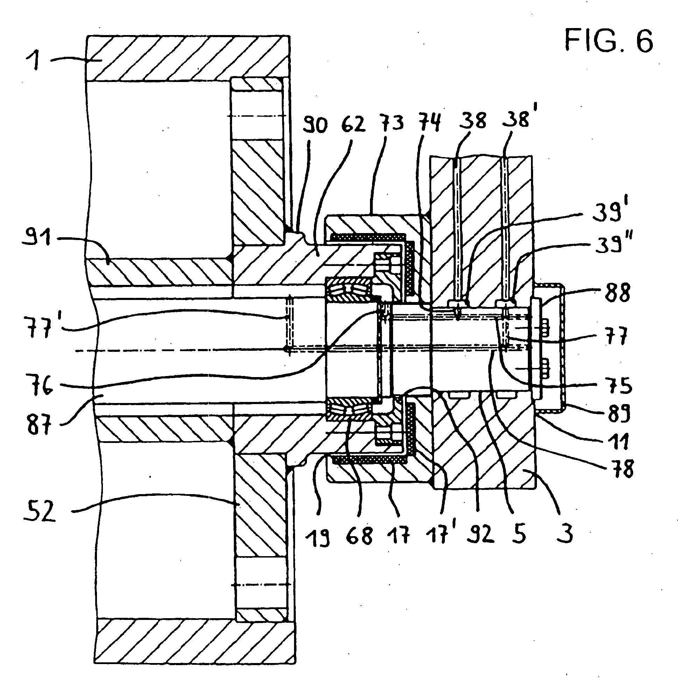

Das in Fig. 6 dargestellte Ausführungsbeispiel unterscheidet sich von dem Ausführungsbeispiel gemäß Fig. 5 lediglich dadurch, dass neben der zylinderförmigen Induktionsspule 17 eine zweite Induktionsspule 17' vorgesehen ist. Die Induktionsspule 17' ist im wesentlichen kreisringscheibenförmig ausgebildet und in einer entsprechenden Ausnehmung des radial nach innen gerichteten Abschnitts des Ansatzes 73 angeordnet.

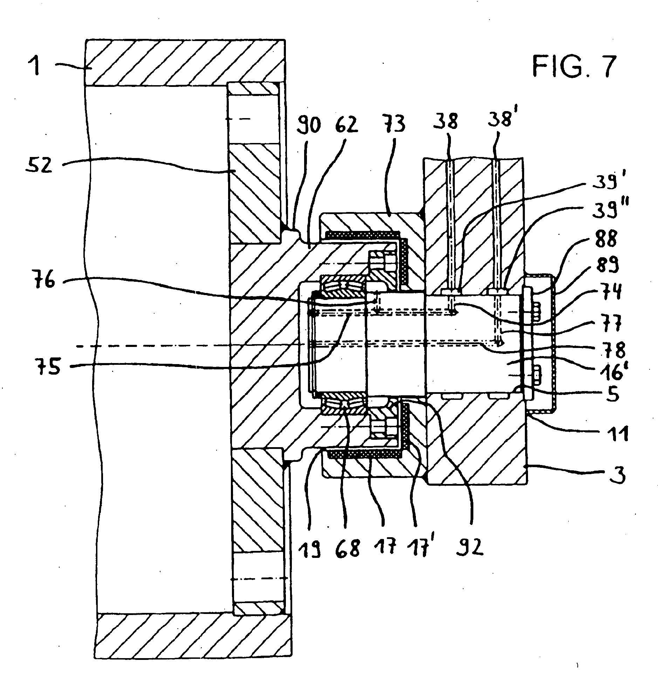

Fig. 7 zeigt ein weiteres Ausführungsbeispiel der erfindungsgemäßen Lagerung. Dieses Ausführungsbeispiel unterscheidet sich von dem in Fig. 6 dargestellten Ausführungsbeispiel im wesentlichen dadurch, dass anstelle einer durchgehenden Achse 87 wiederum Achszapfen 16' eingesetzt sind. Der in die Bohrung der Stirnplatte 52 der hohlzylindrischen Zinkbadrolle 1 formschlüssig eingesetzte und mit der Stirnplatte 52 abdichtend verbundene bzw. verschweißte Adapter 62 ist an seinem in die Zinkbadrolle 1 gerichteten Ende geschlossen. Der Adapter 62 ist somit topfartig ausgebildet und weist einen geschlossenen Boden auf. Die Lüftungsbohrungen 74, 75, 76, 77, 78 sind in Fig. 7 ähnlich wie bei den Ausführungsbeispielen gemäß den Figuren 2 und 3 angeordnet.

Die Erfindung ist in ihrer Ausführung nicht auf die vorstehend beschriebenen Ausführungsbeispiele beschränkt. Vielmehr sind verschiedene Varianten denkbar, die auch bei abweichender Gestaltung von dem in den beiliegenden Ansprüchen angegebenen Erfindungsgedanken Gebrauch machen. Beispielsweise können die in den Figuren 5 und 6 dargestellten Ausführungsbeispiele variiert werden, indem anstelle des jeweiligen Pendelrollenlagers 68 mehrere getrennte Wälzlager, insbesondere Radiallager und Axiallager verwendet werden.

### Bezugszeichenliste

- 1: Umlenk- oder Führungsrolle (Zinkbadrolle)
- 2: Rollentragarm
- 3: Röllentragarm
- 4: Traverse
- 5: Durchbrechung (Bohrung)
- 16': Tragzapfen
- 17: Induktionsspule
- 17': Induktionsspule
- 19: Ringspalt (Dichtspalt)
- 38: Lüftungsleitung für Druckausgleich
- 39': Ringnut
- 39": Ringnut
- 52: Stirnplatte
- 61: Kopf des Tragzapfens
- 62: buchsenartiger Adapter
- 63: Flansch
- 64: Dichtung
- 65: Dichtung
- 66: Vorsprung
- 67: Hohlraum
- 68: Pendelrollenlager
- 69: Spreng- oder Sicherungsring
- 70: Anschlag des buchsenartigen Adapters
- 71: Zwischenring
- 72: Radialabsatz des buchsenartigen Adapters
- 73: ringförmiger Ansatz
- 74: Querbohrung
- 75: Axialbohrung
- 76: Querbohrung
- 77: Querbohrung
- 77': Querbohrung
- 78: Axialbohrung
- 79: Absatz des Tragzapfens
- 80: Ringraum
- 81: Endabschnitt des buchsenartigen Adapters
- 81': Endabschnitt des buchsenartigen Adapters
- 82: Ringfläche der Induktionsspule
- 83: Flansch
- 84: Ringdichtung
- 85: Ringdichtung
- 86: Stirnfläche des buchsenartigen Adapters
- 87: durchgehende Achse
- 88: scheibenförmige Platte
- 89: Dichtkappe
- 90: Bund
- 91: Rohr
- 92: ringförmiger Lagerdeckel

## Patentansprüche

1. Lagerung für eine in einem Metallschmelzebad getaucht angeordnete Umlenk- oder Führungsrolle (1) für zu beschichtendes Metallband, die an Rollentragarmen (2, 3) mit gegen das Metallschmelzebad abgedichteter Lager (68) drehbar gelagert ist,
**dadurch gekennzeiehnet,** dass das jeweilige Lager (68) gegen das Metallschmelzebad mittels mindestens einer Induktionsspule (17, 17') abgedichtet ist, die einen der Umlenk- oder Führungsrolle (1) zugeordneten Tragzapfen (16, 16'), eine Welle oder eine Achse (87) umgibt, wobei die Umlenk- oder Führungsrolle (1) an ihren beiden Stirnseiten jeweils einen buchsenartigen Adapter (62) aufweist, der mit der Induktionsspule (17) einen Dichtspalt (19) definiert.

2. Lagerung nach Anspruch 1,
**dadurch gekennzeichnet, dass** die Lager (68) Wälzlager sind.

3. Lagerung nach Anspruch 1 oder 2,
**dadurch gekennzeichnet, dass** die Lager (68) Rollenlager sind.

4. Lagerung nach einem der Ansprüche 1 bis 3,
**dadurch gekennzeichnet, dass** die Tragzapfen (16') drehfest an den Rollentragarmen (3) befestigt sind, wobei der buchsenartige Adapter (62) einen Axialabschnitt des jeweiligen Tragzapfens (16') koaxial umgibt.

5. Lagerung nach Anspruch 4,
**dadurch gekennzeichnet, dass** auf dem Tragzapfen (16') ein den Adapter (62) tragendes Pendelrollenlager (68) sitzt.

6. Lagerung nach einem der Ansprüche 1 bis 5,
**dadurch gekennzeichnet, dass** die Induktionsspule (17) in einem ringförmigen Ansatz (73) angeordnet ist, der mit dem Rollentragarm (3) verschweißt oder lösbar verbindbar ist.

7. Lagerung nach einem der Ansprüche 1 bis 6,
**dadurch gekennzeichnet, dass** der buchsenartige Adapter (62) einen durchmessererweiterten, einem mittleren Scheibenabschnitt einer Kugel entsprechenden Endabschnitt (81) aufweist, wobei die Induktionsspule (17) radial beabstandet zu dem Endabschnitt (81) des Adapters (62) angeordnet ist und die dem Endabschnitt (81) des Adapters (62) zugewandte Ringfläche (82) der Induktionsspule (17) in Axialschnittansicht gesehen konkav gewölbt ist.

8. Lagerung nach einem der Ansprüche 1 bis 7,
**dadurch gekennzeichnet, dass** der buchsenartige Adapter (62) einen einem Scheibenabschnitt einer Kugel entsprechenden Endabschnitt (81') aufweist, wobei die Induktionsspule (17) radial beabstandet zu dem Endabschnitt (81') des Adapters (62) angeordnet ist, die dem Endabschnitt (81') des Adapters (62) zugewandte Ringfläche (82) der Induktionsspule (17) in Axialschnittansicht konkav gewölbt ist und die Induktionsspule (17) axial beabstandet zu dem größten Außendurchmesserbereich des Endabschnitts (81') des Adapters (62) angeordnet ist.

9. Lagerung nach einem der Ansprüche 1 bis 6,
**dadurch gekennzeichnet, dass** die Umlenk- oder Führungsrolle (1) auf einer von dem einen Tragarm (2) zum anderen Tragarm (3) durchgehenden Achse (87) drehbar gelagert ist.

10. Lagerung nach einem der Ansprüche 1 bis 9,
**dadurch gekennzeichnet, dass** mindestens einer der Rollentragarme (2, 3) verschiebbar in Richtung der Drehachse der Umlenk- oder Führungsrolle (1) gelagert ist.

11. Lagerung nach einem der Ansprüche 1 bis 10,
**dadurch gekennzeichnet, dass** der Rollentragarm (3) mindestens eine Lüftungsleitung (38, 38') für einen Druckausgleich im Bereich eines oder mehrerer Lager (68) aufweist.

12. Lagerung nach einem der Ansprüche 1 bis 11,
**dadurch gekennzeichnet, dass** der Tragzapfen (16, 16') bzw. die Welle oder die Achse (87) Bohrungen (74, 75, 76, 77, 77'. 78) für einen Druckausgleich im Bereich eines oder mehrerer Lager (68) aufweist.

13. Lagerung nach einem der Ansprüche 1 bis 12,
**dadurch gekennzeichnet, dass** die Induktionsspule (17) mit einer Kühleinrichtung versehen ist.

## Claims

1. Bearing arrangement for a deflection or guide roller (1), submerged in a molten bath of metal for metal strip to be coated, said guide roller (1) being rotatably mounted on roller support arms (2, 3) with bearings (68) sealed against the molten bath of metal, **characterized in that** the respective bearing (68) is sealed against the molten bath of metal by means of at least one induction coil (17, 17'), which surrounds a lifting lug (16, 16') associated with the deflection or guide roller (1), a shaft or an axle (87), wherein the deflection or guide roller (1) at its two ends has a sleeve-like adapter (62) in each case, which with the induction coil (17) defines a sealing gap (19).

2. Bearing arrangement according to Claim 1, **characterized in that** the bearings (68) are rolling bearings.

3. Bearing arrangement according to Claim 1 or 2, **characterized in that** the bearings (68) are roller bearings.

4. Bearing arrangement according to any one of Claims 1 to 3, **characterized in that** the lifting lugs (16') are non-rotably secured to the roller support arms (3), wherein the sleeeve-like adapter (62) coaxially surrounds an axial section of the respective lifting lug (16').

5. Bearing arrangement according to Claim 4, **characterized in that** a spherical roller bearing (68) supporting the adapter (62) sits on the lifting lug (16').

6. Bearing arrangement according to any one of Claims 1 to 5, **characterized in that** the induction coil (17) is arranged in a circular shoulder (73), which can be welded or detachably connected to the roller support arm (3).

7. Bearing arrangement according to any one of Claims 1 to 6, **characterized in that** the sleeve-like adapter (62) has a diameter-extended final section (81), corresponding to a central disk section of a sphere, wherein the induction coil (17) is radially arranged at a distance from the final section (81) of the adapter (62) and the ring face (82) of the induction coil (17), facing the final section (81) of the adapter (62), seen in the axial sectional view, is concavely arched.

8. Bearing arrangement according to any one of Claims 1 to 7, **characterized in that** the sleeve-like adapter (62) has a final section (81') corresponding to a disk section of a sphere, wherein the induction coil (17) is radially arranged at a distance from the final section (81') of the adapter (62), the ring face (82) of the induction coil (17), facing the final section (81') of the adapter (62), in the axial sectional view, is concavely arched and the induction coil (17) is axially arranged at a distance from the largest outside diametrical region of the final section (81') of the adapter (62).

9. Bearing arrangement according to any one of Claims 1 to 6, **characterized in that** the deflection or guide roller (1) is rotatably mounted on an axle (87) extending continuously from one support arm (2) to the other support arm (3).

10. Bearing arrangement according to any one of Claims 1 to 9, **characterized in that** at least one of the roller support arms (2, 3) is mounted displaceably towards the rotational axis of the deflection or guide roller (1).

11. Bearing arrangement according to any one of Claims 1 to 10, **characterized in that** the roller support arm (3) has at least one ventilating duct (38, 38') for pressure equalization in the vicinity of one or more bearings (68).

12. Bearing arrangement according to any one of Claims 1 to 11, **characterized in that** the lifting lug (16, 16') or the shaft, or the axle (87) has borings (74, 75, 76, 77, 77', 78) for pressure equalization in the vicinity of one or more bearings (68).

13. Bearing arrangement according to any one of Claims 1 to 12, **characterized in that** the induction coil (17) is provided with a cooling device.

## Revendications

1. Logement de paliers pour un rouleau de renvoi ou de guidage (1) placé au trempé dans un bain de métal fondu, pour un ruban métallique à revêtir, qui est monté tournant sur des bras supports de rouleau (2, 3) avec paliers (68) étanché contre le bain de métal fondu,
**caractérisé en ce que** le palier (68) respectif est étanché contre le bain de métal fondu au moyen d'au moins une bobine d'induction (17, 17') qui entoure un tourillon support (16, 16') affecté au rouleau de renvoi ou de guidage (1), un arbre ou un axe (87), dans lequel le rouleau de renvoi ou de guidage (1) comporte à chacune de ses deux faces frontales un adaptateur (62) en forme de douille qui définit une fente d'étanchéité (19) avec la bobine d'induction (17).

2. Logement de paliers selon la revendication 1,
**caractérisé en ce que** les paliers (68) sont des roulements.

3. Logement de paliers selon la revendication 1 ou 2,
**caractérisé en ce que** les paliers (68) sont des roulements à rouleaux.

4. Logement de paliers selon l'une des revendications 1 à 3,
**caractérisé en ce que** les tourillons supports (16') sont fixés de manière immobilisée en rotation aux bras supports de rouleau (3), dans lequell'adaptateur (62) en forme de douille entoure coaxialement un tronçon axial du tourillon support (16') respectif.

5. Logement de paliers selon la revendication 4,
**caractérisé en ce que**, sur le tourillon support (16') est monté un roulement à rouleaux articulé (68) supportant l'adaptateur (62).

6. Logement de paliers selon l'une des revendications 1 à 5,
**caractérisé en ce que** la bobine d'induction (17) est disposée dans un épaulement annulaire (73) qui est soudé au bras support de rouleau (3) ou est relié à celui-ci de façon démontable.

7. Logement de paliers selon l'une des revendications 1 à 6,
**caractérisé en ce que** l'adaptateur (62) en forme de douille comporte un tronçon d'extrémité (81) élargi en diamètre, correspondant à un tronçon moyen en forme de disque d'une sphère, dans lequel la bobine d'induction (17) est disposée écartée radialement du tronçon d'extrémité (81) de l'adaptateur (62) et **en ce que** la surface annulaire (82) de la bobine d'induction (17) tournée vers le tronçon d'extrémité (81) de l'adaptateur (62) est galbée dans le sens concave vue en coupe axiale.

8. Logement de paliers selon l'une des revendications 1 à 7,
**caractérisé en ce que** l'adaptateur (62) en forme de douille comporte un tronçon d'extrémité (81') correspondant à un tronçon de disque d'une sphère, dans lequel la bobine d'induction (17) est disposée écartée radialement par rapport au tronçon d'extrémité (81') de l'adaptateur (62), **en ce que** la surface annulaire (82) de la bobine d'induction (17) tournée vers le tronçon d'extrémité (81') de l'adaptateur (62) est galbée dans le sens concave vue en coupe axiale et **en ce que** la bobine d'induction (17) est disposée écartée axialement vers la plus grande zone de diamètre extérieur du tronçon d'extrémité (81') de l'adaptateur (62).

9. Logement de paliers selon l'une des revendications 1 à 6,
**caractérisé en ce que** le rouleau de renvoi ou de guidage (1) est monté tournant sur un axe (87) allant de l'un des bras supports de rouleau (2) à l'autre bras support de rouleau (3).

10. Logement de paliers selon l'une des revendications 1 à 9,
**caractérisé en ce qu'**au moins un des bras supports de rouleau (2, 3) est monté de sorte à pouvoir être décalé dans la direction de l'axe de rotation du rouleau de renvoi ou de guidage (1).

11. Logement de paliers selon l'une des revendications 1 à 10,
**caractérisé en ce que** le bras support de rouleau (3) comporte au moins une conduite de ventilation (38, 38') pour une égalisation de pression dans la zone d'un ou de plusieurs paliers (68).

12. Logement de palier selon l'une des revendications 1 à 11,
**caractérisé en ce que** le tourillon support (16, 16'), respectivement l'arbre ou l'axe (87), comportent des trous (74, 75, 76, 77, 77', 78) pour une égalisation de pression dans la zone d'un ou de plusieurs paliers (68).

13. Logement de paliers selon l'une des revendications 1 à 12,
**caractérisé en ce que** la bobine d'induction (17) est dotée d'un dispositif de refroidissement.
